# EUROPÄISCHE PATENTSCHRIFT

(11) **EP 1 833 404 B1**
(45) Veröffentlichungstag und Bekanntmachung des Hinweises auf die Patenterteilung: **12.02.2014**
(21) Anmeldenummer: 05817305.5
(22) Anmeldetag: 03.12.2005
(51) Int. Cl.: A61C 3/16

(54) **MEDIZINISCHES INSTRUMENT UND SYSTEM ZU DESSEN ANWENDUNG**
MEDICAL INSTRUMENT AND SYSTEM FOR THE USE THEREOF
INSTRUMENT MEDICAL ET SYSTEME POUR S'EN SERVIR

(30) Priorität: 28.12.2004 DE 202004020264 U
(43) Veröffentlichungstag der Anmeldung: 19.09.2007
(73) Patentinhaber: Johnki, Bernd J., 46325 Borken (DE)
(72) Erfinder: Johnki, Bernd J., 46325 Borken (DE)
(74) Vertreter: Weisbrodt, Bernd
(86) Internationale Anmeldenummer: PCT/EP2005/012980
(87) Internationale Veröffentlichungsnummer: WO 2006/069616

(56) Entgegenhaltungen:
- WO-A-99/39651
- DE-C- 744 415
- DE-U1- 29 711 085
- US-A- 1 979 831

## Beschreibung

Die vorliegende Erfindung betrifft ein medizinisches Instrument zum Lösen einer lösbar auf Zähnen, Zahnstümpfen und/oder Kieferimplantaten eines Ober- oder Unterkiefers angeordneten Prothese, mit einem Schaft an dessen proximalem Ende ein Griffstück und an dessen distalem Ende ein hakenartig ausgebildetes Kopfteil angeordnet ist, welches einen gegenüber dem Schaft abgewinkelten, ein freiliegendes Ende des Kopfteils bereitstellenden Abschnitt aufweist. Ferner betrifft die vorliegende Erfindung ein System bestehend aus einer lösbar auf Zähnen, Zahnstümpfen und/oder Kieferimplantaten eines Ober- oder Unterkiefers anordbaren Prothese und einem erfindungsgemäßen medizinisches Instrument.

Im Stand der Technik, wie z.B. DE 744415 oder WO99/39651, sind zahlreiche medizinische Instrumente mit einem Schaft an dessen proximalem Ende ein Griffstück und an dessen distalem Ende ein ein für zahnmedizinische Behandlungen ausgebildetes Werkzeug aufweisendes Kopfteil angeordnet ist bekannt. Mit den bisher bekannten medizinischen Instrumenten ist ein Lösen von einer lösbar auf Zähnen, Zahnstümpfen und/oder Kieferimplantaten eines Ober- oder Unterkiefers angeordneten Prothese in der Regel nur von entsprechend ausgebildetem Fachkräften und/oder mit ausreichender Übung möglich. Aufgrund der konstruktiven Ausgestaltung der bisher bekannten medizinischen Instrumente sind dabei immer wieder, auch bei Anwendung durch Fachkräfte, Verletzungen des Zahnfleischs des Prothesenträgers gegeben. Ferner ist die Handhabung der bisher bekannten medizinischen Instrumente bei einer Anwendung bei hilfe- bzw. pflegebedürftigen, Prothesen tragenden Personen, beispielsweise bettlägerigen oder querschnittsgelähmten Personen, durch entsprechendes Hilfs- bzw. Pflegepersonal überaus unbequem und umständlich sowohl für die hilfe- bzw. pflegebedürftige, die Prothese tragende Person als auch die helfende bzw. pflegende Person. Darüber hinaus können die Prothesen, insbesondere Teil- und/oder Vollprothesen wie Brücken, Kronen oder dergleichen, beim insbesondere durch Abziehen von Zähnen, Zahnstümpfen und/oder Kieferimplantaten gegebenen Lösen durch die bisher bekannten medizinischen Instrumente beschädigt und/oder zerstört werden.

Vor diesem Hintergrund liegt der vorliegenden Erfindung die **Aufgabe** zugrunde, ein medizinisches Instrument zum Lösen einer lösbar auf Zähnen, Zahnstümpfen und/oder Kieferimplantaten eines Ober- oder Unterkiefers angeordneten Prothese der eingangs genannten Art bereitzustellen, welches es einem Prothesenträger selbst als auch Fach-, Hilfs- und/oder Pflegepersonal auf einfache, bequeme und insbesondere zumindest weitestgehend verletzungsfreie Art und Weise ermöglicht eine lösbar auf Zähnen, Zahnstümpfen und/oder Kieferimplantaten eines Ober- oder Unterkiefers angeordnete Prothese beschädigungsfrei zu lösen.

Die Aufgabe ist bei einem ein medizinisches Instrument zum Lösen einer lösbar auf Zähnen, Zahnstümpfen und/oder Kieferimplantaten eines Ober- oder Unterkiefers angeordneten Prothese, mit einem Schaft an dessen proximalem Ende ein Griffstück und an dessen distalem Ende ein hakenartig ausgebildetes Kopfteil angeordnet ist, welches einen gegenüber dem Schaft abgewinkelten, ein freiliegendes Ende des Kopfteils bereitstellenden Abschnitt aufweist, erfindungsgemäß dadurch **gelöst**, dass der Abschnitt des Kopfteils an dem freiliegenden Ende einen den Durchmesser des Abschnitts am freiliegenden Ende wulstartig vergrößernden Rand aufweist.

Der Erfindung liegt die Erkenntnis zugrunde, dass durch den den Durchmesser des Abschnitts am freiliegenden Ende wulstartig vergrößernden Rand eine lösbar auf Zähnen, Zahnstümpfen und/oder Kieferimplantaten eines Ober- oder Unterkiefers angeordnete Prothese auf einfache, bequeme und weitestgehend verletzungsfreie Art und Weise beschädigungsfrei zu lösen ist. Durch den wulstartig vergrößerten Rand ist dabei insbesondere sichergestellt, dass das Zahnfleisch des Prothesenträgers beim Lösen der Prothese, insbesondere durch Abziehen der Prothese von den Zähnen, Zahnstümpfen und/oder Kieferimplantaten, nicht verletzt wird.

Beim Lösen kann der Prothesenträger selbst oder eine Fach-, Hilfs- und/oder Pflegeperson den den Durchmesser des Abschnitts am freiliegenden Ende des Kopfteils wulstartig vergrößernden Rand des erfindungsgemäßen medizinischen Instruments auf die vestibuläre und/oder buccale Wand einer Ober- oder Unterkieferprothese aufsetzen und das medizinische Instrument unter Kontakt zur Prothesenoberfläche zum Rand der Prothese in Richtung Zahnfleisch bzw. Ober- oder Unterkiefer gleiten. Wird der Rand der Prothese erreicht, rutscht der wulstartig vergrößerte Rand des erfindungsgemäßen medizinischen Instruments über den Rand der Prothese. In diesem Zustand kann die so gefasste Prothese durch entsprechende Abziehbewegung des medizinischen Instruments in Richtung weg vom Zahnfleisch bzw. Ober- oder Unterkiefer von den Zähnen, Zahnstümpfen und/oder Kieferimplantaten eines Ober- oder Unterkiefers, auf denen die Prothese lösbar angeordnet ist gelöst und entfernt werden.

In einer vorteilhaften Ausgestaltung der Erfindung weist der wulstartige Rand des medizinischen Instruments einen im wesentlichen halbkreisförmigen Querschnitt auf. Gemäß einem vorteilhaften Vorschlag der Erfindung weist der halbkreisförmige Querschnitt einen Radius von etwa 0,25 mm bis etwa 1,00 mm auf.

In der Erfindung vergrößert sich der Durchmesser des Abschnitts des Kopfteils zum freien Ende des Abschnitts hin konisch. Dadurch ist insbesondere die Stabilität des Abschnitts vergrößerbar und der wulstartige Rand besser an dem Abschnitt ausbildbar.

In einer weiteren vorteilhaften Ausgestaltung der Erfindung liegt der wulstartige Rand zumindest teilweise außerhalb der von dem Durchmesser des Griffstücks definierten Hüllebene. Der Erfindung liegt die Erkenntnis zugrunde, dass durch diese räumliche Anordnung des wulstartigen Randes des hakenartigen Kopfteils außerhalb der von dem Griffstück definierten Hüll- bzw. Greifebene die das erfindungsgemäße medizinische Instrument am Griffstück greifende Hand einer helfenden bzw. pflegenden Person beim Lösen bzw. Abziehen der einer Prothese aus dem unmittelbaren Gesichtsbereich der hilfe- bzw. pflegebedürftigen Person bringbar ist, so dass das Lösen bzw. Abziehen der Prothese sowohl für die hilfe- bzw. pflegebedürftige Person als auch die helfende bzw. pflegende Person insgesamt noch bequemer und einfacher erfolgen kann.

In einer bevorzugten Ausgestaltung der Erfindung ist der Abschnitt ein Schenkel von zwei im wesentlichen V-förmig zueinander angeordneten Schenkeln ist, wobei der den Abschnitt bildende Schenkel das frei liegende Ende des Kopfteils bereitstellt und der andere Schenkel am Schaft angeordnet ist. Die V-förmig zueinander angeordneten Schenkel ermöglichen insbesondere eine Zahnreihen des Ober- oder Unterkiefers übergreifende Anordnung des medizinischen Instruments zum Lösen bzw. Abziehen von Prothesen von der palatinalen oder lingualen Seite der Zahnreihen her. Vorteilhafterweise verläuft die zwischen der Spitze und der Öffnung des von den Schenkeln gebildeten V verlaufende, den zwischen den Schenkeln liegenden Winkel im wesentlichen halbierende Mittellinie im wesentlichen senkrecht zur Längserstreckungsrichtung des Schaftes.

Eine weitere vorteilhafte Ausgestaltung der Erfindung ist gekennzeichnet durch ein über das Kopfteil steckbares Deckelelement. Das vorzugsweise als Verschlusskappe ausgebildete Deckelelement ermöglicht vorteilhafterweise einen Schutz des hakenartigen Kopfteils des erfindungsgemäßen Instruments vor Beschädigungen und/oder Verschmutzungen im aufgebrachten Zustand. Vorteilhafterweise ist das Deckelelement auf und/oder an dem Griffstück befestigbar, vorzugsweise durch Aufstecken oder Aufschrauben.

Zur weiteren Verbesserung der Handhabung, insbesondere hinsichtlich ergonomischer Gesichtspunkte, ist das Griffstück des erfindungsgemäßen medizinischen Instruments im Querschnitt vorteilhafterweise ovalförmig ausgebildet ist. Eine weitere Ausgestaltung der Erfindung sieht vor, dass das Griffstück des erfindungsgemäßen medizinischen Instruments Erhöhungen und/oder Vertiefungen aufweist. Vorteilhafterweise sind die Erhöhungen und/oder Vertiefungen durch Einsätze oder Auflagen aus einem rutschfesten Material, vorzugsweise Gummi, Silikon und/oder Kautschuk, ausgebildet. Durch diese Maßnahmen - einzeln und/oder in Kombination miteinander - ist das erfindungsgemäße medizinische Instrument ermüdungsfreier und insgesamt sicherer handhabbar.

Weiter wird mit der vorliegenden Erfindung zur technischen Lösung der Aufgabe ein System bestehend aus einer lösbar auf Zähnen, Zahnstümpfen und/oder Kieferimplantaten eines Ober- oder Unterkiefers anordbaren Prothese und einem erfindungsgemäßen medizinisches Instrument vorgeschlagen, wobei die Prothese wenigstens einen mit dem den Durchmesser des Abschnitts am freiliegenden Ende des Kopfteils des medizinischen Instruments wulstartig vergrößernden Rand zusammenwirkenden kragenartigen Rand aufweist. Durch den mit dem wulstartigen Rand des medizinischen Instruments zusammenwirkenden kragenartigen Rand der Prothese ist ein optimal aufeinander abgestimmtes System von Prothese und medizinischem Instrument bereitgestellt, welches in optimaler Art und Weise ein noch einfacheres, bequemeres, verletzungs- und beschädigungsfreies Lösen der Prothese von den Zähnen, Zahnstümpfen und/oder Kieferimplantaten eines Ober- oder Unterkiefers ermöglicht.

In einer weiteren Ausgestaltung des erfindungsgemäßen Systems ist der kragenartige Rand durch die vestibuläre und/oder buccale Wand einer Ober- oder Unterkieferprothese gebildet.

Vorteilhafterweise weist der kragenartige Rand der Prothese wenigstens eine mit dem wulstartigen Rand des medizinischen Instruments zusammenwirkende kerbenartige Aufnahme auf. In einer weiteren vorteilhaften Ausgestaltung der Erfindung kann der wulstartige Rand des medizinischen Instruments in die kerbenartige Aufnahme der Prothese wenigstens teilweise eingreifen. Durch diese erfindungsgemäßen Ausgestaltungen ist die Handhabbarkeit des Systems weiter verbesserbar.

Weitere Einzelheiten, Merkmale und Vorteile der Erfindung werden nachfolgend anhand des in den Figuren der Zeichnung dargestellten Ausführungsbeispiels näher erläutert. Dabei zeigen:
- Fig. 1: in einer schematisch perspektivischen Ansicht ein Ausführungsbeispiel eines erfindungsgemäßen medizinischen Instruments zum Lösen einer lösbar auf Zähnen, Zahnstümpfen und/oder Kieferimplantaten eines Ober- oder Unterkiefers angeordneten Prothese;
- Fig. 2: eine schematische Längsseitenansicht des medizinischen Instruments gemäß Fig. 1;
- Fig. 3: eine schematische Draufsicht auf das medizinische Instrument gemäß Fig. 1;
- Fig. 4: eine geschnittene Ansicht des medizinischen Instruments gemäß der Schnittlinie A-A nach Fig. 3;
- Fig. 5: eine Frontansicht des distalen Endes des medizinischen Instruments gemäß Fig. 1 und
- Fig. 6: im Detail eine schematische Längsseitenansicht des distalen Endes des medizinischen Instruments nach Fig. 1.

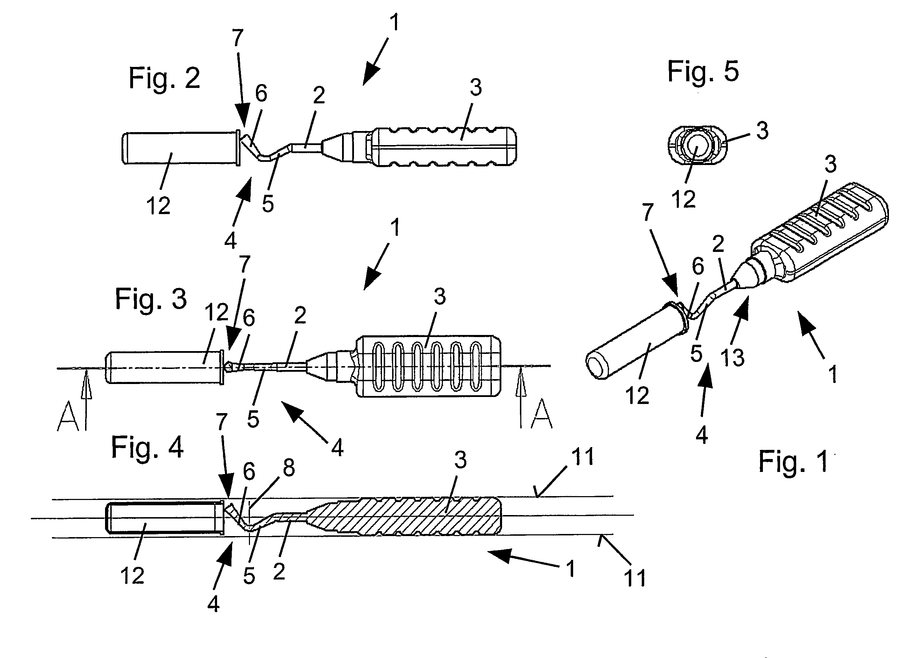

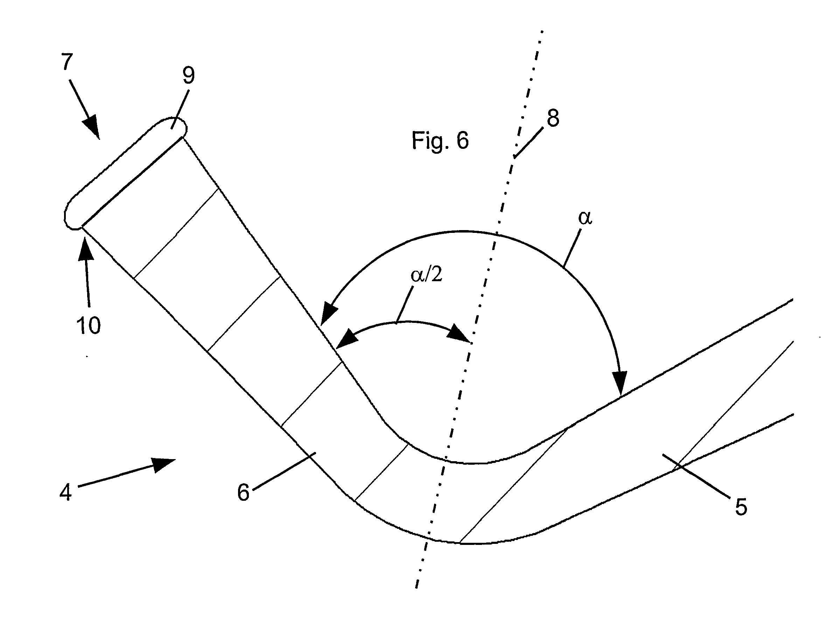

Das in den Figuren 1 bis 6 dargestellte medizinische Instrument 1 ist vorliegend einstückig aus Metall oder Kunststoff mit einem Schaft 2, an dessen proximalem Ende ein Griffstück 3 und an dessen distalem Ende ein hakenartiges Kopfteil 4 ausgebildet ist.

Das Kopfteil 4 des medizinischen Instruments 1 ist vorliegend von zwei V-förmig zueinander angeordneten Schenkeln 5 und 6 ausgebildet. Der Schenkel 5 ist am Schaft 2 angeordnet. Der sich an den Schenkel 5 anschließende Schenkel 6 stellt ein freiliegendes Ende 7 des Kopfteils 4 bereit. Dabei verläuft vorliegend die zwischen der Spitze und der Öffnung des von den Schenkeln 5 und 6 gebildeten V verlaufende, den zwischen den Schenkeln 5 und 6 des V liegenden Winkel a halbierende Mittellinie 8 senkrecht zur Längserstreckungsrichtung des Schaftes 2.

Das freiliegende Ende 7 weist vorliegend einen gegenüber dem sich zum freien Ende 7 hin konisch vergrößernden Durchmesser des Schenkels 6 einen wulstartig vergrößerten Rand 9 mit einem halbkreisförmigen Querschnitt mit einem Radius von etwa 0,3 mm auf. Der wulstartige Rand 9 liegt - wie anhand von Fig. 4 ersichtlich - vorliegend innerhalb der von dem Durchmesser des Griffstücks 3 definierten Hüll- bzw. Greifebene 11.

Weiter weist das medizinisches Instrument 1 ein über das Kopfteil 4 steckbares Deckelelement 12 auf, welches vorliegend auf durch Aufstecken auf einen sich konisch verjüngenden Befestigungsabschnitt 13 des Griffstücks 3 an dem Griffstück 3 befestigbar ist. Das Griffstück 3 des medizinischen Instruments 1 ist vorliegend im Querschnitt im ovalförmig ausgebildet, wie insbesondere anhand von Fig. 5 erkennbar ist. Weiter weist das Griffstück 3 Erhöhungen und/oder Vertiefungen zur besseren Greifbarkeit desselben auf.

### Bezugszeichenliste:

- 1: medizinisches Instrument
- 2: Schaft
- 3: Griffstück
- 4: Kopfteil
- 5: Schenkel
- 6: Abschnitt/Schenkel
- 7: freies Ende (Abschnitt/Schenkel (6)
- 8: Mittellinie
- 9: wulstartiger Rand (freies Ende (7))
- 10: Abrundung
- 11: Hüllebene
- 12: Deckelelement/Verschlusskappe
- 13: Befestigungsabschnitt (Griffstück (3))
- a: Winkel

## Patentansprüche

1. Medizinisches Instrument (1) zum Lösen einer lösbar auf Zähnen, Zahnstümpfen und/oder Kieferimplantaten eines Ober- oder Unterkiefers angeordneten Prothese, mit einem Schaft (2) an dessen proximalem Ende ein Griffstück (3) und an dessen distalem Ende ein hakenartig ausgebildetes Kopfteil (4) angeordnet ist, welches einen gegenüber dem Schaft (2) abgewinkelten, ein freiliegendes Ende (7) des Kopfteils (4) bereitstellenden Abschnitt (6) aufweist,
**dadurch gekennzeichnet,**
**dass** der Abschnitt (6) des Kopfteils (4) an dem freiliegenden Ende (7) einen den Durchmesser des Abschnitts (6) am freiliegenden Ende (7) wulstartig vergrößernden Rand (9) aufweist, wobei sich der Durchmesser des Abschnitts (6) des Kopfteils (4) zum freien Ende (7) des Abschnitts (6) hin konisch vergrößert.

2. Medizinisches Instrument (1) nach Anspruch 1, **dadurch gekennzeichnet, dass** der wulstartige Rand (9) einen im wesentlichen halbkreisförmigen Querschnitt aufweist.

3. Medizinisches Instrument (1) nach Anspruch 2, **dadurch gekennzeichnet, dass** der halbkreisförmige Querschnitt einen Radius von etwa 0,25 mm bis etwa 1,00 mm aufweist.

4. Medizinisches Instrument (1) nach einem der Ansprüche 1 bis 3, **dadurch gekennzeichnet, dass** der wulstartige Rand (9) zumindest teilweise außerhalb der von dem Durchmesser des Griffstücks (3) definierten Hüllebene (11) liegt.

5. Medizinisches Instrument (1) nach einem der Ansprüche 1 bis 4, **dadurch gekennzeichnet, dass** der Abschnitt (6) ein Schenkel (6) von zwei im wesentlichen V-förmig zueinander angeordneten Schenkeln (5, 6) ist, wobei der den Abschnitt (6) bildende Schenkel (6) das freiliegende Ende (7) des Kopfteils (4) bereitstellt und der andere Schenkel (5) am Schaft (2) angeordnet ist.

6. Medizinisches Instrument (1) nach Anspruch 5, **dadurch gekennzeichnet, dass** die zwischen der Spitze und der Öffnung des von den Schenkeln (5, 6) gebildeten V verlaufende, den zwischen den Schenkeln (5, 6) liegenden Winkel (a) im wesentlichen halbierende Mittellinie (8) im wesentlichen senkrecht zur Längserstreckungsrichtung des Schaftes (2) verläuft.

7. Medizinisches Instrument (1) nach einem der Ansprüche 1 bis 6, **gekennzeichnet durch** ein über das Kopfteil (4) steckbares Deckelelement (12).

8. Medizinisches Instrument (1) nach Anspruch 7, **dadurch gekennzeichnet, dass** das Deckelelement (12) auf und/oder an dem Griffstück (3) durch Aufstecken oder Aufschrauben befestigbar ist.

9. Medizinisches Instrument (1) nach einem der Ansprüche 1 bis 8, **dadurch gekennzeichnet, dass** das Griffstück (3) im Querschnitt im wesentlichen ovalförmig ausgebildet ist.

10. Medizinisches Instrument (1) nach einem der Ansprüche 1 bis 9, **dadurch gekennzeichnet, dass** das Griffstück (3) Erhöhungen und/oder Vertiefungen aufweist.

11. Medizinisches Instrument (1) nach Anspruch 10, **dadurch gekennzeichnet, dass** die Erhöhungen und/oder Vertiefungen durch Einsätze oder Auflagen aus einem rutschfesten Material ausgebildet sind.

12. Medizinisches Instrument nach Anspruch 11, **dadurch gekennzeichnet, dass** die Einsätze oder Auflagen aus Gummi, Silikon und/oder Kautschuk, ausgebildet sind.

13. System bestehend aus einer lösbar auf Zähnen, Zahnstümpfen und/oder Kieferimplantaten eines Ober- oder Unterkiefers anordbaren Prothese und einem medizinisches Instrument (1) nach einem der Ansprüche 1 bis 12, **dadurch gekennzeichnet, dass** die Prothese wenigstens einen mit dem den Durchmesser des Abschnitts (6) am frei liegenden Ende (7) des Kopfteils (4) des medizinischen Instruments (1) wulstartig vergrößernden Rand (9) zusammenwirkenden kragenartigen Rand aufweist.

14. System nach Anspruch 13, **dadurch gekennzeichnet, dass** der kragenartige Rand durch die vestibuläre und/oder buccale Wand einer Ober- oder Unterkieferprothese gebildet ist.

15. System nach Anspruch 13 oder Anspruch 14, **dadurch gekennzeichnet, dass** der kragenartige Rand der Prothese wenigstens eine mit dem wulstartigen Rand (9) des medizinischen Instruments (1) zusammenwirkende kerbenartige Aufnahme aufweist.

16. System nach Anspruch 15, **dadurch gekennzeichnet, dass** der wulstartige Rand (9) des medizinischen Instruments (1) in die kerbenartige Aufnahme der Prothese wenigstens teilweise eingreifen kann.

## Claims

1. A medical instrument (1) for loosening a prosthesis that is detachably arranged on teeth, tooth stumps and/or jaw implants of an upper or lower jaw, comprising a shaft (2) at the proximal end of which a handle component (3) is disposed and at the distal end of which a hook-like head portion (4) is placed which comprises a section (6) that is angled with respect to the shaft (2) and provides an exposed end (7) of the head portion (4),
**characterized in that**
at the exposed end (7) the section (6) of the head portion (4) comprises a rim (9) that enlarges the diameter of the section (6) at the exposed end (7) in a bulging manner, wherein the diameter of the section (6) of the head portion (4) increases conically towards the exposed end (7) of the section (6).

2. A medical instrument (1) according to claim 1, **characterized in that** the bulging rim (9) comprises an essentially semicircular cross section.

3. A medical instrument (1) according to claim 2, **characterized in that** the semicircular cross section comprises a radius of about 0.25 mm to about 1.00 mm.

4. A medical instrument (1) according to one of the claims 1 through 3, **characterized in that** the bulging rim (9) is at least partially placed outside the shell plane (11) defined by the diameter of the handle component (3).

5. A medical instrument (1) according to one of the claims 1 through 4, **characterized in that** the section (6) is one leg (6) of two legs (5, 6) which are essentially arranged in the form of a V with respect to each other, wherein the leg (6) that forms the section (6) provides the exposed end (7) of the head portion (4) and the other leg (5) is disposed on the shaft (2).

6. A medical instrument (1) according to claim 5, **characterized in that** the center line (8) which extends between the tip and the opening of the V formed by the legs (5, 6) and which essentially divides the angle (a) between the legs (5, 6) in half essentially extends perpendicularly to the direction of the longitudinal extension of the shaft (2).

7. A medical instrument (1) according to one of the claims 1 through 6, **characterized by** a cover element (12) that can be slipped over the head portion (4).

8. A medical instrument (1) according to claim 7, **characterized in that** the cover element (12) can be fastened on and/or to the handle component (3) by slipping it over or screwing it to the handle component.

9. A medical instrument (1) according to one of the claims 1 through 8, **characterized in that** the cross section of the handle component (3) is essentially oval-shaped.

10. A medical instrument (1) according to one of the claims 1 through 9, **characterized in that** the handle component (3) comprises raised parts and/or indentations.

11. A medical instrument (1) according to claim 10, **characterized in that** the raised parts and/or indentations are formed by inserts or coats made of a slip-resistant material.

12. A medical instrument according to claim 11, **characterized in that** the inserts or coats are made of rubber, silicone and/or caoutchouc.

13. A system composed of a prosthesis that can be detachably arranged on teeth, tooth stumps and/or jaw implants of an upper or lower jaw and a medical instrument (1) according to one of the claims 1 through 12, **characterized in that** the prosthesis comprises a collar-shaped rim that collaborates with the rim (9) which enlarges the diameter of the section (6) at the exposed end (7) of the head portion (4) of the medical instrument (1) in a bulging manner.

14. A system according to claim 13, **characterized in that** the collar-shaped rim is formed by the vestibular and/or buccal wall of an upper jaw or lower jaw prosthesis.

15. A system according to claim 13 or claim 14, **characterized in that** the collar-shaped rim of the prosthesis comprises at least one notch-like receiver that collaborates with the bulging rim (9) of the medical instrument (1).

16. A system according to claim 15, **characterized in that** the bulging rim (9) of the medical instrument (1) can at least partially engage into the notch-like receiver of the prosthesis.

## Revendications

1. Instrument médical (1) destiné à détacher une prothèse disposée de manière amovible sur des dents, des chicots et/ou des implants de la mâchoire d'une mâchoire supérieure ou inférieure, comprenant une tige (2) ayant une extrémité proximale à laquelle une poignée (3) est disposée et une extrémité distale à laquelle une partie de tête (4) sous forme d'un crochet est disposée qui comprend une section (6) qui est coudé par rapport à la tige (2) et qui fournit une extrémité exposée (7) de la partie de tête (4),
**caractérisé en ce que**
la section (6) de la partie de tête (4) comprend, à l'extrémité exposée (7), un bord (9) qui élargit le diamètre de la section (6) à l'extrémité exposée (7) à la façon d'un bourrelet, le diamètre de la section (6) de la partie de tête (4) s'agrandissant de manière conique vers l'extrémité exposée (7) de la section (6).

2. Instrument médical (1) selon la revendication 1, **caractérisé en ce que** le bord (9) sous forme d'un bourrelet comprend une section transversale essentiellement semi-circulaire.

3. Instrument médical (1) selon la revendication 2, **caractérisé en ce que** la section transversale semi-circulaire comprend un rayon d'environ 0,25 mm à environ 1,00 mm.

4. Instrument médical (1) selon l'une des revendications 1 à 3, **caractérisé en ce que** le bord (9) en forme de bourrelet est au moins partiellement disposé à l'extérieur du plan d'enveloppe défini par le diamètre de la poignée (3).

5. Instrument médical (1) selon l'une des revendications 1 à 4, **caractérisé en ce que** la section (6) est une branche (6) de deux branches (5, 6) qui sont essentiellement disposées sous forme de V l'une par rapport à l'autre, dans lequel la branche (6) qui forme la section (6) fournit l'extrémité exposée (7) de la partie de tête (4) et l'autre branche (5) est disposée sur la tige (2).

6. Instrument médical (1) selon la revendication 5, **caractérisé en ce que** la ligne médiane (8) qui s'étend entre le sommet et l'ouverture du V formé par les branches (5, 6) et qui essentiellement bissecte l'angle (a) entre les branches (5, 6) s'étend essentiellement de façon perpendiculaire à la direction de l'extension longitudinale de la tige (2).

7. Instrument médical (1) selon l'une des revendications 1 à 6, **caractérisé par** un élément de couvercle (12) qu'on peut glisser sur la partie de tête (4).

8. Instrument médical (1) selon la revendication 7, **caractérisé en ce qu'**on peut attacher l'élément de couvercle (12) sur et/ou à la poignée (3) en le faisant glisser sur la poignée ou en le vissant à celle-ci.

9. Instrument médical (1) selon l'une des revendications 1 à 8, **caractérisé en ce que** la section transversale de la poignée (3) est essentiellement de forme ovale.

10. Instrument médical (1) selon l'une des revendications 1 à 9, **caractérisé en ce que** la poignée (3) comprend des élévations et/ou des creux.

11. Instrument médical (1) selon la revendication 10, **caractérisé en ce que** les élévations et/ou les creux sont formés par des inserts ou des couches appliquées en une matière antidérapant.

12. Instrument médical selon la revendication 11, **caractérisé en ce que** les inserts ou les couches appliquées sont en gomme, en silicone et/ou en caoutchouc.

13. Système composé d'une prothèse qu'on peut disposer de manière amovible sur des dents, des chicots et/ou des implants de la mâchoire d'une mâchoire supérieure ou inférieure et d'un instrument médical (1) selon l'une des revendications 1 à 12, **caractérisé en ce que** la prothèse comprend un bord en forme de collerette qui coopère avec le bord (9) qui élargit le diamètre de la section (6) à l'extrémité exposée (7) de la partie de tête (4) de l'instrument médical (1) à la façon d'un bourrelet.

14. Système selon la revendication 13, **caractérisé en ce que** le bord en forme de collerette est formé par la paroi vestibulaire et/ou buccale d'une prothèse de la mâchoire supérieure ou inférieure.

15. Système selon la revendication 13 ou la revendication 14, **caractérisé en ce que** le bord en forme de collerette de la prothèse comprend au moins un logement en forme d'encoche qui coopère avec le bord (9) en forme de bourrelet de l'instrument médical (1).

16. Système selon la revendication 15, **caractérisé en ce que** le bord (9) en forme de bourrelet de l'instrument médical (1) peut au moins partiellement venir en prise avec le logement en forme d'encoche de la prothèse.
